(19) **Europäisches Patentamt**
**European Patent Office**
**Office européen des brevets**

(11) **EP 2 293 674 B1**

(12) **EUROPEAN PATENT SPECIFICATION**

(45) Date of publication and mention
of the grant of the patent:
**03.05.2017 Bulletin 2017/18**

(51) Int Cl.:
*A21D 13/00* *(2017.01)*    *A21D 8/04* *(2006.01)*

(21) Application number: **09745779.0**

(86) International application number:
**PCT/EP2009/055819**

(22) Date of filing: **14.05.2009**

(87) International publication number:
**WO 2009/138447 (19.11.2009 Gazette 2009/47)**

(54) **METHOD AND COMPOSITION TO IMPROVE SHORT BITE OF BAKERY PRODUCTS**

VERFAHREN UND ZUSAMMENSETZUNG ZUR VERBESSERUNG DES KURZEN BISSES VON BACKWAREN

PROCÉDÉ ET COMPOSITION POUR AMÉLIORER LA FACILITÉ À MÂCHER DES PRODUITS DE BOULANGERIE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **16.05.2008 EP 08156398**

(43) Date of publication of application:
**16.03.2011 Bulletin 2011/11**

(73) Proprietor: **PURATOS N.V.**
**1702 Groot-Bijgaarden (BE)**

(72) Inventors:
• **VAN WINCKEL, Bruno**
**B-9000 Gent (BE)**
• **VERTE, Fabienne**
**B-9070 Destelbergen (BE)**

(74) Representative: **De Clercq, Ann G. Y.**
**De Clercq & Partners**
**Edgard Gevaertdreef 10a**
**9830 Sint-Martens-Latem (BE)**

(56) References cited:
**EP-A- 1 350 432**    **EP-A- 1 790 230**
**WO-A-2005/077192**    **WO-A-2005/077194**

• **SAI MANOHAR R ET AL: "EFFECT OF ALPHA-AMYLASE AND PROTEASE ON THE RHEOLOGICAL CHARACTERISTICS OF DOUGH AND QUALITY OF BISCUITS" ADVANCED IN FOOD SCIENCES, TECHNISCHE UNIVERSITAET MUENCHEN, MUENCHEN, DE, vol. 19, no. 1/02, 1 January 1997 (1997-01-01), pages 15-21, XP008015977 ISSN: 1431-7737**

**Description**

**Field of the Invention**

The present invention relates to improving the short bite and texture parameters of bakery products.

**Background of the Invention**

The consumers prefer to buy fresh bread and they want it to remain fresh for a long time. Consumers also prefer to buy breads with the lowest possible (labelled) additives.

Bread-improving and/or dough improving additives are in the bread making process added to the dough in order to improve texture, volume, flavour and freshness of the bread as well as to improve machinability and stability of the dough.

**State of the art**

Emulsifiers serve to improve dough extensibility and may also be of some value for the consistency of the resulting bread.

Patent EP0776604 describes the use of unsaturated monoglycerides to produce microwavable crispy bread-roll having short bite. However, no quantification of short bite is given in said document.

One of the disadvantages of such products is that, in Europe, the addition of emulsifiers and other additives such as monoglycerides requires specific labelling of the bakery products with a E-number. Contrary to monoglycerides and/or emulsifiers, the addition of protease in bread does not require such specific labelling.

Proteases may be added in low amount by comparison to additives, preserving taste and other organoleptic properties of the bread.

Proteases have a long history of use in the baking sector. They are mostly used by the baker to reduce mechanical dough development requirements of unusually strong or tough gluten. They reduce the consistency of the dough, decreasing the faringraph value. They lower the viscosity and increase the extensibility of the dough. In the end product they improve the loaf volume and the bread colour. Also the flavour can be enhanced by production of certain peptides. The proteases mellow the gluten enzymatically rather than mechanically. After baking, proteases are thought to be inactivated.

The proteases most used in baking are from *Aspergillus oryzae* and *Bacillus subtilis.* The neutral bacterial proteases are by far more active on gluten than the alkaline proteases. Papain, bromelain and ficin are thiol(cystein)-proteases extracted from papaya, pineapple and figs. Especially papain is very reactive towards gluten proteins. Bacterial proteases and papain, especially neutral proteases, are used in cookies, breadsticks and crackers where a pronounced slackening of the dough is desired. However, in bread-making, a milder hydrolysis by fungal proteases is preferred. Patent EP-B-1496748 (corresponding to patent applications EP 1 790 230 and EP 1 350 432) discloses the use of intermediate thermostable or thermostable proteases for the prevention or retarding of staling during the baking process of bakery products. This effect is especially noticeable in combination with other anti-staling enzymes (like thermostable amylases from *Bacillus licheniformis* or *Bacillus stearothermophilus* and thermo-stable maltogenic amylases).

WO 2005/077194 discloses laminated dough products such as croissants and the use of a protease applied on their outer surface to improve their crispiness after baking.

WO 2005/077192 discloses a method to prepare a bread dough or a part baked bread, not including baked products from a laminated dough, comprising the step of applying a protease on their outer surface to improve their crispiness for a longer time after baking.

Sai Manohar and P. haridas Rao (1997) Adv. Food Sci, Vol. 19, 15-21 discloses the effects of $\alpha$-amylase and protease on several characteristics of biscuits.

Proteases have also some disadvantages when used in baking. The action of the proteases is not limited in time as it may continue after mixing. This may cause an increased risk of weakening the dough and increasing the stickiness of the dough. Sometimes their action is even enhanced by the pH drop during fermentation.

The use of proteases in baking requires strict control of the bulk fermentation and the proofing conditions of the dough. The proteases are inactivated during baking (Kruger, J.E. (1987) Enzymes and their role in cereal technology AACC 290-304). Especially neutral *Bacillus* proteases and papain should be dosed very carefully as overdoses slacken the dough too much. This may result in dough collapse before ovening or a lower bread volume and a more open crumb structure. In Europe, where the flours are weaker than in the US or Canada, the risk of overdosing protease is particularly present.

Furthermore, proteases also increase stickiness of the dough because the hydrolytic action causes water release from the gluten (Schwimmer, S. (1981) Source book of food enzymology - AVI Publishing, 583-584). This means that in practice proteases are not much used in bread-making in Europe.

Fungal proteases are sensitive to high temperatures. Some bacterial neutral and alkaline proteases are resistant to higher heat treatments. Neutral thermostable proteases from *Bacillus*, which may be tolerant to oxidizing agents, are preferred in detergent formulations. Also alkaline thermo-stable proteases from *Bacillus* are used in washing and detergent formulations.

Papain is very heat stable and requires a prolonged heating at 90 - 100°C for deactivation. Bromelain is less stable and is deactivated at around 70°C. Other heat stable proteases are produced by *Bacillus licheniformis* NS70 (Chemical Abstracts, 127, 4144 CA), *Bacillus licheniformis* MIR 29 (Chemical Abstracts, 116, 146805 CA), *Bacillus stearothermophilus* (Chemical Abstracts, 124, 224587 CA), *Nocardiopsis* (Chemical Abstracts, 114, 162444 CA) and *Thermobacteroides* (Chemical Abstracts, 116, 146805 CA). This is not an exhaustive list, but it illustrates the importance of the thermostable proteases and their application, mostly in detergents.

### Aims of the invention

The present invention provides a use for improving short bite properties of a bakery product without the disadvantages of above-mentioned proteases. For instance, proteases that have temperature optimum close to room temperature give weakening of the gluten during kneading and rising of the dough and/or changes in the properties of the dough rheology.

### Summary of the invention

The invention relates to the use of at least one intermediate thermostable or thermostable serine or metallo-protease for improving the short bite of a bakery product, wherein texture parameters consisting in the force (g) and the total work (g.sec) needed to break an identical sample of bakery product are measured, wherein the force (g) and the total work (g.sec) are both improved by at least 10% vis-a-vis an identical sample but not containing at least one intermediate thermostable or thermostable serine or metallo-protease, and wherein the ratio between the protease activity at optimum temperature and the protease activity at 25°C is higher than 10.

According to the invention, texture parameters consisting in the force (g) and the total work (g.sec) needed to break an identical sample of bakery product are measured, for instance by a texture analyser device, used to break said bakery product.

Advantageously, both texture parameters are measured simultaneously by a texture analyser as classically used for measuring the texture of bread, such as for instance an analyser TA-XT2™.

In the method of the invention the short bite per sample of bakery product can also be estimated by taste panel of people.

Advantageously, in the use according to the invention, thermostable and/or intermediate thermostable protease has a temperature activity optimum higher than 60°C, preferably higher than 70°C, more preferably higher than 80°C.

In the use according to the invention, the ratio between the protease activity at optimum temperature and the protease activity at 25°C is higher than 10, preferably higher than 15.

Advantageously, the proteases according to the invention show no adverse effect on dough rheology, on the crumb structure and on the volume of the resulting bakery product.

In the use according to the invention, the proteases are preferably obtained by extraction from naturally-occurring eukaryotic or prokaryotic organisms, by synthesis or by genetic engineering.

Preferably, the protease is a neutral or an alkaline protease.

The protease may be a *Thermus aquaticus* (Taq) protease, preferably isolated from *Thermus aquaticus* LMG8924, preferably aqualysin I, thermitase, isolated from *Thermoactinomyces vulgaris*, thermolysin, isolated from *Bacillus thermoproteolyticus* or subtilisin, isolated from *Bacillus licheniformis.*

The invention may be applied to soft bakery products such as bread, soft rolls, donuts, buns, microwavable buns, Danish pastry, hamburger rolls, pizza and pita bread and cake.

Proteases are preferably added to the flour at 5000 to 7500 units / 100 kg of flour of Thermitase, at 0.35 to 0.7 units/ 100 kg of flour of Thermolysin, at 0.35 to 0.7 units / 100 kg of flour of Subtilisin, or at 230 to 10400 units / 100 kg of flour of Taq protease, preferably at 350 to 700 units / 100 kg of flour of Taq protease.

The invention may be applied to crusty products such as baguettes and rolls.

Taq protease is preferably added to the flour of crusty products at 1300 to 10400 units / 100 kg of flour of Taq protease.

Advantageously, the proteases for use herein are added to the bakery product before forming the dough; preferably, the proteases are added to the flour; more preferably, the proteases are added to a mixture comprising appropriate carriers normally used in bakery applications and/or active ingredients and/or conventionally used baking additives.

To the protease of the invention, one or more baking ingredients like oxidants (vitamin C or azodicarbonamide), emulsifiers (mono- or di-glycerides, diacetyl tartrate esters of monoglycerides, sodium stearoyl lactylates) sugar esters of fatty acids, lecithin; sugar and/or salt, fat and / or oil may be added.

**Short description of the figures**

Fig. 1 illustrates TA-XT2™ texture analyzer (Stable Micro Systems UK). Fig. 1a is a typical graph showing the force applied by the analyzer on a sample of bakery product in function of the time; Fig. 1b shows the device and its action in breaking a bread.
Fig. 2 shows the relative activity of several proteases in function of the temperature. Fig. 2a: Taq protease, Fig. 2b, Subtilisin, Fig. 2c, Thermitase.

**Detailed description of the invention**

The soft products disclosed therein present a soft crust, including amongst others all packed bakery goods and sweet goods (packed or unpacked). Their shelf-life may vary from 2 days to several months. Their fat and sugar content varies from 0% to over 30% each. Non-limiting examples of soft products are bread, soft rolls, donuts, buns, microwavable buns, Danish pastry, hamburger rolls, pizza and pita bread and cake.

Crusty products have a crusty crust. Both their fat and sugar content is lower than 2%. They are usually unpacked or wrapped with paper packaging. Their shelf-life is about 2 days in maximum. Non-limiting examples of crusty products are baguettes and rolls.

Consumers' choices are dictated by organoleptic properties, which encompass features such as mouthfeel and toughness.

Mouthfeel can influence the consumers' perception of freshness and is strongly related to parameters like moistness, melting and short bite.

The sensation of moistness is strongly correlated to the freshness and the staling of the crumb. However excessive moistness results in stickiness.

Melting reflects the time and the easiness a bolus of bread can be swallowed. Melting is improved by sufficient initial moistness, followed by a short bite and absence of bal-forming upon chewing.

Short bite, also sometimes referred to as opposite to chewiness and / or to toughness, is used to designate the force and total work needed to break a sample of bakery product and/or the number of chews needed to masticate a similar sample until a consistency that makes it ready to swallow. Short bite can be easily measured by trained taste panels of people and can be reasonably quantified using an arbitrary short bite scale. Such techniques are well known in the food industry and are generally referred to as organoleptic testing.

An initial training session is organized to familiarize the panelists with the range of products that will be tested. In this session reference standards are presented to train the panelists to recognize the differences between the product attributes that are to be measured.

Short bite estimated by trained taste panels of people can be compared with values measured by a texture analyser.

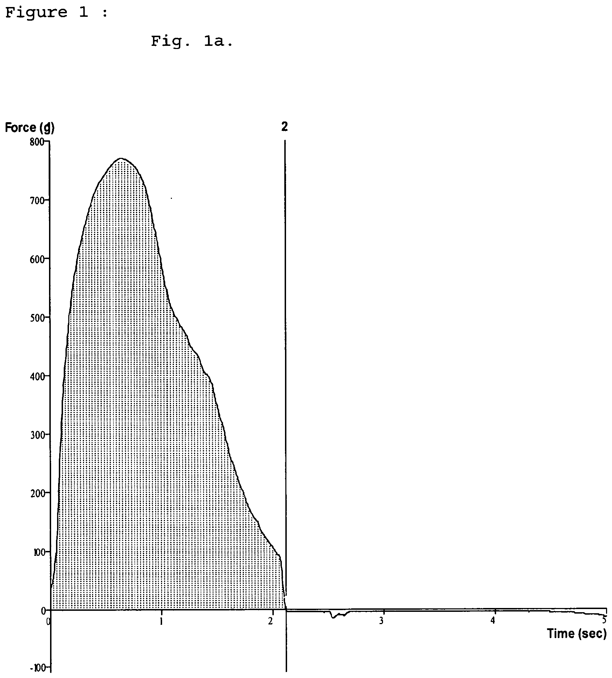

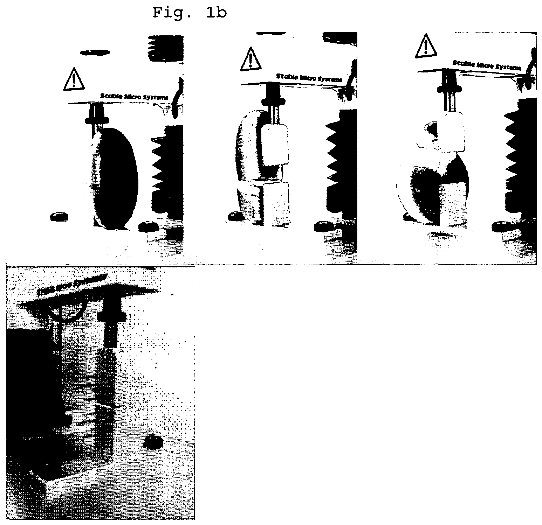

A preferred texture analyser is TA-XT2™ (Stable Micro Systems UK; Fig. 1).

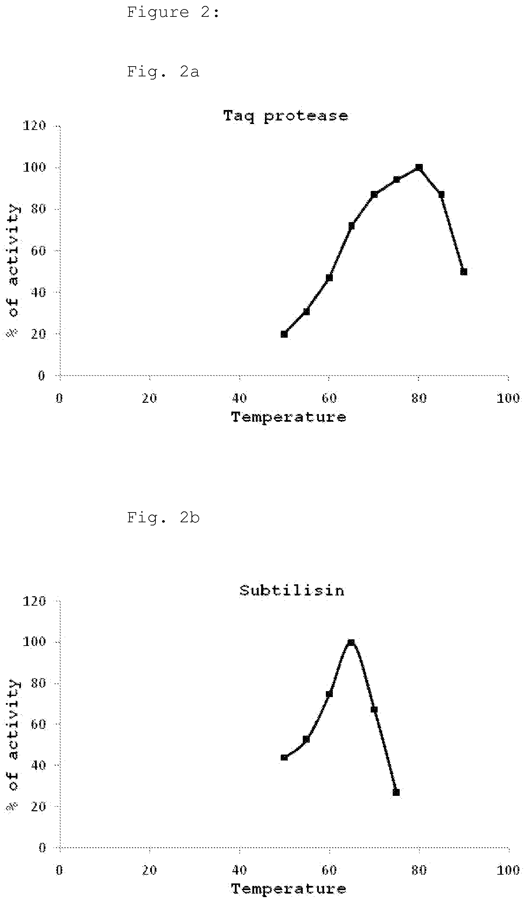

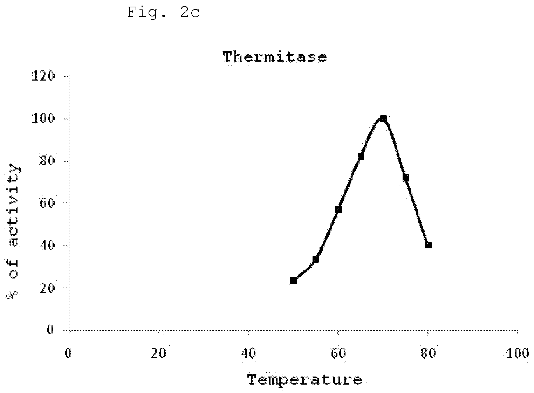

Thermostable and/or intermediate thermostable proteases have a low activity at a temperature of 25°C to 40°C and a temperature optimum of 60 - 80°C or higher (see Fig. 2). The enzyme may need or may not need to be activated during the baking process and preferably loose their activity at the end of the baking process.

The thermostable and/or intermediate thermostable proteases can be produced by microorganisms either prokaryotes (bacteria, archaea) and eukaryotes (fungi) or extracted from plants.

The proteases according to the invention are such that at a pH where the enzyme is stable they have a temperature optimum that is higher than 60°C, preferably higher than 70°C and even more preferably higher than 80°C.

The ratio between their activity at optimum temperature and at 25°C is at least higher than 10.

They show an absence of adverse effect on dough rheology (such as weakening of the dough structure), on the crumb structure (such as appearance of an open crumb structure) and on the volume (such as a decrease in volume) of the resulting bread.

The choice of the protease is very important. The protease should not exert any adverse effect such as weakening of the dough during dough ingredients mixing and the subsequent proofing of the dough. Indeed in this case the permitted dosage of unsuitable proteases would be too low to have a pronounced effect on the mouthfeel.

The protease(s) may be added in a composition containing other enzymes like amylase and/or xylanase and/or lipase and/or glucose oxidase and/or lipoxygenase and/or peroxidase and/or carbohydrate oxidase.

The dough-improving and/or bread improving composition may contain a combination of conventionally used baking additives like: gluten and/or oxidants like vitamin C or azodicarbonamide and/or emulsifiers like mono- or di-glycerides, diacetyl tartrate esters of monoglycerides, sodium stearoyl lactylates, sugar esters of fatty acids, lecithin and/or sugar and/or salt and/or fat and/or oil.

These mixtures of active ingredients including the protease according to the invention and/or other enzymes than the protease according to the invention and/or baking additives can be diluted by appropriate carriers normally used in bakery applications like wheat flour, rye flour, starch, water or oil, to obtain a dosage level appropriate for mixing in doughs for baking properties.

The mixtures can be in powder, granulated, agglomerated or liquid form.

Typically, the protease is added to the bakery product before forming the dough. Preferably, the protease is added to the flour. More preferably, the protease is added to a mixture comprising appropriate carriers normally used in bakery applications and/or active ingredients and/or conventionally used baking additives.

## Examples

*Example 1 : Overview of used thermostable or intermediate proteases and their origin*

The proteases may be obtained from a producing species (eukaryotic or prokaryotic) by the use of any suitable technique. For instance, the protease preparation may be obtained by fermentation of a micro-organism and subsequent isolation of the protease containing preparation from the resulting broth by methods known in the art such as centrifugation, ultrafiltration or chromatography. The proteases may also be obtained by cloning the DNA sequence coding for a suitable protease in a host organism, expressing the protease intra- or extracellularly and collecting the produced enzyme.

The proteases may also be obtained by directed evolution or gene shuffling of thermostable or non-thermostable proteases or enzymes genes and subsequent expression as mentioned above. As long as they have an activity of cleaving peptide bond(s), they are considered to be proteases in the scope of this invention. Below are mentioned non-limiting examples of proteases for use in the following examples, and their preferred origin.

| Protease | Species | Origin | Topt |
|---|---|---|---|
| Taq protease | *Thermus aquaticus* | Fermentation as described above | 80°C |
| Thermitase | *Thermoactinomyces vulgaris* | Fermentation as described in EP1496748 | 70°C |
| Thermolysin | *Bacillus thermoproteolyticus* | Sigma-Aldrich | 70°C |
| Subtilisin | *Bacillus licheniformis* | Sigma-Aldrich | 65°C |
| Papain(*) | Papaya | Sigma-Aldrich | 70°C |
| (*) not according to the present invention | | | |

*Example 2 : Effect of Thermus aquaticus (Taq) protease, Thermitase, Thermolysin, Papain and Subtilisin on Proof Time, Loaf Moisture and Specific Loaf Volume*

Addition of either enzyme to the dough at the dosage specified in the following examples does not change the proof time, loaf moisture and specific loaf volume. The initial moisture content varies slightly, but all the buns lost approximately the same amount of moisture during six days of storage at room temperature.

*Example 3 Taq protease isolation*

One of the preferred proteases used is obtained by culturing the strain *Thermus aquaticus* LMG 8924 on the following medium (in distilled water): 1 g/l tryptone; 1 g/l yeast extract and 100 ml/l salt solution. The pH is adjusted to 8.2 with 1 M NaOH prior to sterilization at 121°C for 15 minutes. The salt solution has the following composition (in distilled water): 1 g/l nitriloacetic acid; 0.6 g/l $CaSO_4.2H_2O$; 1 g/l $MgSO_4.7H_2O$; 80 mg/l NaCl, 1.03 g/l $KNO_3$; 6.89 g/l $NaNO_3$; 2.8 g/l $Na_2HPO_4.12H_2O$; 10 ml/l $FeCl_3.6H_2O$ solution (47 mg/100 ml $dH_2O$); 10 ml/l trace element solution. The Trace element solution has the following composition (in distilled water): 0.5 ml/l $H_2SO_4$; 1.7 g/l $MnSO_4.H_2O$; 0.5 g/l $ZnSO_4.7H_2O$; 0.5 g/l $H_3BO_3$; 25 mg/l $CuSO_4.5H_2O$; 25 mg/l $Na_2MoO_4.2H_2O$; 46 mg/l $CoCl_2.6H_2O$. Incubation is done at 60°C with aeration ($pO_2$ 60%, 4 vvm) during 24 hours after which the medium is collected for further concentration.

*Thermus aquaticus* LMG 8924 produced at least two extracellular proteases. One of the extracellular proteases is aqualysin I, and is an alkaline protease which is secreted linearly from the early stationary phase until cells cease to grow. The optimum temperature of the proteolytic activity is between 70 and 80°C. Another extracellular protease is aqualysin II and is a neutral protease, the production of which appears from day 4 and its concentration increasing linearly for 5 days. At that stage the maximum activity is obtained at 95°C (the highest temperature tested).

To prepare samples of aqualysin I (according to the present invention, referred to as "Taq protease") for baking tests the fermentation extract is used after 1 day of fermentation, i.e. when no or few aqualysin II is produced. The supernatant of the fermentation is then concentrated by membrane ultrafiltration (molecular cut off 10000 Da). Taq protease is essentially Aqualysin I and may comprise low amounts of Aqualysin II. The crude Taq protease solution is stored frozen until used in baking tests.

The Taq protease solution displays maximum activity at a temperature of 80°C. There is almost no loss of enzyme activity while heating the solution for one hour at 80°C. Heating the enzyme at 90°C during 10 min reduces the activity by 60%.

The protease activity is measured on azurine-crosslinked casein (AZCL-casein). It is prepared by dyeing and crosslinking casein to produce a material which hydrates in water but is water-insoluble. Hydrolysis by proteases produces water soluble dyed fragments, and the rate of release of these (increase in absorbance at 590 nm) can be related directly to enzyme activity (Protazyme AK Tablets, Megazyme, Ireland). A protazyme AK tablet is incubated in 100 mM $Na_2HPO_4.2H_2O$; pH 7.0 at 60°C for 5 min. An aliquot of enzyme (1.0 ml) is added and the reaction is allowed to continue for exactly 10 min. The reaction is terminated by the addition of tri-sodium phosphate (10 ml, 2% w/v, pH 12.3). The tube is allowed to stand for approx. 2 min at room temperature and its content is filtered. The absorbance of the filtrate is measured at 590 nm against a substrate blank.
The activity is expressed as:

$$mU/ml = (34.2 * (Abs_{590} \text{ enzyme} - Abs_{590} \text{ blank}) + 0.6) / \text{dilution}$$

The enzymatic activity can also be measured with other assays for protease activity known by persons skilled in the art. Among these is the colorimetric method using casein as substrate followed by the detection of the released amino acids with the Folin & Ciocalteu's Phenol reagent.

*Example 4 : tests on soft buns*

The standard baking test for soft buns is performed as follows. The basic recipe is (in grams):

| | |
|---|---|
| Wheat Flour (Duo) | 2000 |
| Water | 940 |
| Fresh Yeast (Bruggeman, Belgium) | 160 |
| Sodium Chloride | 34 |
| Partially hydrogenated palm oil | 65 |
| Sugar (sucrose) | 160 |
| Ascorbic acid | 0.08 |

The ingredients are mixed for 2 min at low and 7 min at high speed in a spiral mixer type Diosna (SP24). The final dough temperature is 27°C. 1200 g dough is rounded and proofed during 20 min at bakery temperature (25°C) and humidity (50-55%). 40 g dough pieces are made up using the Rotamat moulder. These dough pieces are proofed at 35°C for 60 min at 95% relative humidity in a Koma proofbox. The buns are then baked at 215°C during 9 min in a WP oven without steam. It is obvious to one skilled in the art that same end results can be obtained by using equipment of other suppliers.

The trained panel marks the products according to a reference on a 0 to 5 points line scale with 0 being the low end (though) and 5 the high end (short). Evaluations by panellists which are significantly different from the ones of the other panellists are removed.

In addition, a TA-XT2™ texture analyzer equipped with a pizza tensile rig used at a speed of 20 mm/sec allows the measurement of the following parameters: the force (maximum force needed to break the bun expressed in grams (g)) and the total work (total work needed to break the bun expressed in g.sec and represented by the surface below the curve on the chart generated by the apparatus, see fig 1). As factors such as batch of flour, ambient temperature and humidity, and time between baking and test may affect said parameters, measures are compared to a reference using the same ingredients, and baked and tested in parallel. Similar comparisons to the references have been obtained using several batches of flour, at different temperature and humidity, and at one to several days after baking, thus the following mentioned features are not limiting the invention.

To be effective on the mouthfeel and especially on the short bite, the additives should at least lower the maximum force with 10 % and the total work with 10 %. Such difference is repeatedly perceived by a sensorial panel.

*Example 5 : validation of short bite measurements according to taste panel and relation with texture parameters:* effects of monoglycerides on the short bite in soft buns (according to the state of the art)

Buns have been baked according to the aforementioned method with the addition of unsaturated monoglycerides (Multex Mono 9202 mpw produced by Beldem; Belgium). Force and total work have been measured 1 day after baking with the texture analyzer and short bite has been estimated by a sensory panel as described in example 4. Results are presented in table 1.

Table 1 :

|  | Force Max G | Total Work g.sec | Short bite |
|---|---|---|---|
| Reference | 565 | 921 | 0 |
| 500 g* monoglycerides | 491 | 726 | 4 |
| * per 100 kg flour. | | | |

By comparison to the Reference, the addition of monoglycerides improves short bite as estimated by a trained panel, and reduces the force and the total work by more than 10%.

There is a relation (inverse) between the maximum force and the total work with the sensorial perception of short bite.

*Example 6 : Dose effect of Taq protease on short bite in soft buns and relation with texture parameters*

Buns have been baked according to the aforementioned method with addition of different concentrations of Taq protease (0 U = Reference).

The effect of proteases added to bakery products on short bite can be measured by a sensory evaluation panel, preferably trained using soft buns baked according to Example 5, and a texture analyzer.

Short bite has been estimated by a sensory panel and force and total work have been measured 1 day after baking with the texture analyzer as described in example 4. Results are presented in table 2.

Table 2.

|  | Force Max g | Total Work g.sec | Short bite |
|---|---|---|---|
| Reference (0 U)* | 514 | 924 | 0 |
| 230 U* Taq protease | 462 | 831 | 2 |
| 690 U* Taq protease | 445 | 773 | 4 |
| 1150 U* Taq protease | 462 | 790 | 4 |
| * expressed as units added to 100 kg flour. | | | |

It has now been surprisingly found that by comparison to the Reference bun at all doses tested, Taq protease addition results into an improved short bite, as good as the results obtained with the monoglycerides used according to the state of the art, and a reduction of the force and of the total work by at least 10%.

*Example 7 : Effect of Taq protease and Thermitase on short bite in soft buns and relation with texture parameters*

Buns have been baked according to the aforementioned method with addition of different concentrations of thermitase or Taq protease. Short bite has been estimated by a sensory panel and force and total work have been measured 1 day after baking with the texture analyzer as described in example 4. Results are presented in table 3.

Table 3.

|  | Force g | Total Work g.sec | Short bite |
|---|---|---|---|
| Reference (0 U*) | 549 | 825 | 0 |

(continued)

|  | Force g | Total Work g.sec | Short bite |
|---|---|---|---|
| 800 U* Taq protease | 452 | 693 | 4 |
| 1600 U* Taq protease | 421 | 696 | 4 |
| 5000 U* Thermitase | 429 | 634 | 5 |
| 7500 U* Thermitase | 405 | 623 | 5 |
| * expressed as units added to 100 kg flour. | | | |

By comparison to the Reference bun, at all doses tested Taq protease and thermitase result into an improved short bite and a reduction of the force and of the total work by at least 10%.

*Example 8 : Effect of Taq protease, Thermolysin and Subtilisin on short bite in soft buns and relation with texture parameters*

Buns have been baked according to the aforementioned method with addition of different concentrations of Taq protease, thermolysin and subtilisin. Short bite has been estimated by a sensory panel and force and total work have been measured 1 day after baking with the texture analyzer as described in example 4. Results are presented in table 4.

Table 4.

|  | Force Max g | Total Work g.sec | Short bite |
|---|---|---|---|
| Reference (0 U*) | 762 | 1102 | 0 |
| 345 U* Taq protease | 594 | 765 | 4 |
| 690 U* Taq protease | 525 | 713 | 4 |
| 0.35 U* Thermolysin | 595 | 969 | 2 |
| 0.7 U* Thermolysin | 592 | 920 | 2 |
| 0.35 U* Subtilisin | 558 | 898 | 2 |
| 0.7 U* Subtilisin | 553 | 973 | 2 |
| * expressed as units added to 100 kg flour. | | | |

By comparison to the Reference buns, at all doses tested Taq protease, thermolysin and subtilisin result into an improved short bite and a reduction of the force and of the total work by at least 10%.

*Comparative Example 1 : Effect of Taq protease and maltogenic amylase on short bite in soft buns and relation with texture parameters*

Buns have been baked according to the aforementioned method with addition of different concentrations of Taq protease and Novamyl® (Novozymes), a maltogenic alpha-amylase well known for its effect on softness in bread. Short bite has been estimated by a sensory panel and force and total work have been measured 1 day after baking with the texture analyzer as described in example 4. Results are presented in table 5.

Table 5.

|  | Force Max g | Total Work g.sec | Short bite |
|---|---|---|---|
| Reference (0 U*) | 730 | 1058 | 0 |
| 230 U* Taq protease | 652 | 839 | 2 |
| 460 U* Taq protease | 538 | 711 | 4 |
| 2.5 g* Novamyl | 571 | 1051 | 0 |
| 5 g* Novamyl | 573 | 1067 | 0 |
| 8 g* Novamyl | 579 | 1100 | 0 |
| 10 g* Novamyl | 568 | 1052 | 0 |
| * expressed as units added to 100 kg flour. | | | |

By comparison to the Reference buns, only the addition of Taq protease results into an improved short bite and a reduction of the force and of the total work by at least 10%. Absence of effect on texture parameters and short bite of another amylase, Ban 800 (Novozymes) has been confirmed using the same methods.

*Comparative Example 2 : Effect of Taq protease and papain* on *short bite in soft buns and relation with texture parameters*

Buns have been baked according to the aforementioned method with addition of different concentrations of Taq protease and papain. Short bite has been estimated by a sensory panel and force and total work have been measured 1 day after baking with the texture analyzer as described in example 4. Results are presented in table 6.

Table 6.

|  | Force Max g | Total Work g.sec | Short bite |
|---|---|---|---|
| Reference (0 U*) | 549 | 825 | 0 |
| 350 U* Taq protease | 452 | 693 | 4 |
| 700 U* Taq protease | 421 | 696 | 4 |
| 0.3 g* papain | 514 | 870 | 0 |
| 0.5 g* papain | 502 | 919 | 0 |
| * expressed as units added to 100 kg flour. | | | |

By comparison to the Reference buns, only Taq protease, results into an improved short bite and a reduction of the force and of the total work by at least 10%.

*Example 9 : Effect of Taq protease* on *short bite in microwavable buns and relation with texture parameters*

Microwavable buns have been baked according to the aforementioned method with addition of Taq protease. Short bite has been estimated by a sensory panel and force and total work have been measured 4 days after baking with the texture analyzer as described in example 4. Results are presented in table 7.

Table 7.

|  | Force Max g | Total Work g.sec | Short bite |
|---|---|---|---|
| Reference (0 U*) | 275 | 1246 | 0 |
| 780 U* Taq protease | 196 | 1054 | 4 |
| * expressed as units required for 100 kg flour. | | | |

Taq protease has an effect on short bite and reduces the force and the total work by 28.7% and 15.4% respectively.

*Example 10 : Effect of Taq protease on short bite in soft buns with different types of flour and relation with texture parameters*

Buns have been baked according to the aforementioned method with different types of flour and with the addition of Taq protease. Short bite has been estimated by a sensory panel and force and total work have been measured 1 day after baking with the texture analyzer as described in example 4. Results are presented in table 8.

Table 8.

|  | Force Max G | Total Work g.sec | Short bite |
|---|---|---|---|
| High gluten flour (HGF) | 638 | 1256 | 0 |
| HGF + 460 U* Taq protease | 465 | 953 | 4 |
| Medium gluten flour (MGF) | 671 | 893 | 1 |
| MGF + 460 U* Taq protease | 487 | 688 | 4 |
| Low gluten flour (LGF) | 580 | 993 | 1 |

(continued)

|  | Force Max G | Total Work g.sec | Short bite |
|---|---|---|---|
| LGF + 460 U* Taq protease | 489 | 783 | 4 |
| * expressed as units required for 100 kg flour. | | | |

By comparison to the Reference buns in all flour tested, the addition of Taq protease improves short bite and reduces the force and the total work by more than 10%.

Example 11 : Effect of Taq protease on short bite in crusty products

The standard baking tests for baguettes (standard for crusty products) is performed as follow. The basic recipe is (in grams):

| Flour (Surbi) | 2000 |
|---|---|
| Water | 1400 |
| Fresh Yeast (Bruggeman, Belgium) | 150 |
| Sodium Chloride | 50 |
| S-500 Controller | 75 |

The ingredients are mixed for 2 min at low and 10 min at high speed in a spiral mixer type Diosna (SP24). The final dough temperature is 26°C. After a bulk fermentation for 45 min at 25°C, 250 g dough pieces are made up using a moulder type Alliance (for 50 cm dough pieces). The dough pieces are proofed at 30°C and 95% relative humidity for 150 min. Then the breads are baked in a rotary oven for 25 min at 230/200°C with 7 sec steam at the oven loading and steam key open after 10 min. It is obvious to one skilled in the art that same end results can be obtained by using equipment of other suppliers.

The effects of the proteases on crusty products are evaluated by a sensorial taste panel and by using TA-XT2™ texture analyzer, as described above for buns.

Baguettes have been baked according to the aforementioned method for crusty products with addition of different concentrations of Taq protease.

Baguettes have been analysed by a sensory panel and force and total work have been measured 2 hours after baking with the texture analyzer as described in Example 4. Results are presented in table 10.

Table 10.

|  | Force Max G | Total Work g.sec | Short bite |
|---|---|---|---|
| Reference | 4885 | 3297 | 0 |
| 1300 U* Taq protease | 4243 | 2271 | 4 |
| 2600 U* Taq protease | 4292 | 2136 | 4 |
| 3900 U* Taq protease | 3942 | 2167 | 4 |
| * expressed as units added to 100 kg flour. | | | |

By comparison to the Reference, the addition of Taq protease improves short bite and reduces the force and the total work by more than 10%.

The invention is not limited by the examples above and, in the light of the description, the skilled person will be able to use other proteases than in the examples of the present text and to apply them to obtain the features of the method of the invention.

Bakery products were analysed for their texture parameters as defined above, using preferably a TA-XT2 ™ texture analyzer, but the person skilled in the art may easily find and/or adapt other devices suitable for the invention without being outside the scope of the present invention.

**Claims**

1. Use of at least one intermediate thermostable or thermostable serine or metallo-protease for improving the short bite of a bakery product, wherein texture parameters consisting in the force (g) and the total work (g.sec) needed to break an identical sample of bakery product are measured, wherein the force (g) and the total work (g.sec) are both improved by at least 10% vis-à-vis an identical sample but not containing at least one intermediate thermostable or thermostable serine or metallo-protease, and wherein the ratio between the protease activity at optimum temperature and the protease activity at 25°C is higher than 10.

2. Use according to claim 1 wherein texture parameters are measured simultaneously by a texture analyser device, used to break said bakery product.

3. Use according to claim 1 or 2 wherein the short bite per sample of bakery product is estimated by taste panel of people.

4. Use according to any of claims 1 to 3, wherein the thermostable and/or intermediate thermostable protease has a temperature activity optimum higher than 60°C, preferably higher than 70°C, preferably higher than 80°C.

5. Use according to any of claims 1 to 4, wherein the ratio between the protease activity at optimum temperature and the protease activity at 25°C is higher than 15.

6. Use according to any one of claims 1 to 5, wherein the proteases show no adverse effect on dough rheology, on the crumb structure and on the volume of the resulting bakery product.

7. Use according to any one of the preceding claims, wherein the protease is a protease isolated from *Thermus aquaticus,* preferably being essentially aqualysin I, thermitase, isolated from *Thermoactinomyces vulgaris*, thermolysin, isolated from *Bacillus thermoproteolyticus* or subtilisin, isolated from *Bacillus licheniformis.*

8. Use according to any of claims 1 to 7, wherein bakery products are soft bakery products such as bread, soft rolls, donuts, buns, microwavable buns, Danish pastry, hamburger rolls, pizza and pita bread and cake.

9. Use according to any one of the preceding claims wherein 5000 to 7500 units / 100 kg of flour of thermitase are used, 0.35 to 0.7 units / 100 kg of flour of thermolysin are used, 0.35 to 0.7 units / 100 kg of flour of subtilisin are used, or 230 to 10400 units / 100 kg of flour of *Thermus aquaticus* protease are used, more preferably 350 to 700 units / 100 kg of flour of *Thermus aquaticus* protease are used.

10. Use according to any of claims 1 to 7 wherein the bakery products are crusty products such as baguettes and rolls.

11. Use according to claim 10 wherein 1300 to 10400 units /100 kg of flour of *Thermus aquaticus* protease are used.

12. Use according to any one of the preceding claims wherein said protease is added to said bakery product before forming the dough; preferably, said protease is added to the flour; more preferably, said protease is added to a mixture comprising appropriate carriers normally used in bakery applications and/or active ingredients and/or conventionally used baking additives.

**Patentansprüche**

1. Verwendung wenigstens einer intermediär thermostabilen oder thermostabilen Serin- oder Metalloprotease zum Verbessern des kurzen Bisses einer Backware, wobei Texturparameter bestehend aus der zum Brechen einer identischen Backwarenprobe benötigten Kraft (g) und Gesamtarbeit (g.s) gemessen werden, wobei die Kraft (g) und die Gesamtarbeit (g.s) beide um wenigstens 10 % gegenüber einer identischen Probe, die die wenigstens eine intermediär thermostabile oder thermostabile Serin- oder Metalloprotease nicht enthält, verbessert sind und wobei das Verhältnis zwischen der Proteaseaktivität bei der optimalen Temperatur und der Proteaseaktivität bei 25 °C höher als 10 ist.

2. Verwendung gemäß Anspruch 1, wobei die Texturparameter gleichzeitig durch eine Texturanalysevorrichtung, die zum Brechen der Backware verwendet wird, gemessen werden.

**3.** Verwendung gemäß Anspruch 1 oder 2, wobei der kurze Biss pro Backwarenprobe von einem Geschmacksgremium aus Personen abgeschätzt wird.

**4.** Verwendung gemäß einem der Ansprüche 1 bis 3, wobei die thermostabile und/oder intermediär thermostabile Protease ein Temperaturoptimum der Aktivität von höher als 60 °C aufweist, vorzugsweise höher als 70 °C, vorzugsweise höher als 80 °C.

**5.** Verwendung gemäß einem der Ansprüche 1 bis 4, wobei das Verhältnis zwischen der Proteaseaktivität bei der optimalen Temperatur und der Proteaseaktivität bei 25 °C höher als 15 ist.

**6.** Verwendung gemäß einem der Ansprüche 1 bis 5, wobei die Proteasen keine ungünstige Wirkung auf die Teigrheologie, auf die Krumenstruktur und auf das Volumen der erhaltenen Backware zeigen.

**7.** Verwendung gemäß einem der vorstehenden Ansprüche, wobei die Protease eine aus *Thermus aquaticus* isolierte Protease ist, vorzugsweise im Wesentlichen Aqualysin I, Thermitase, isoliert aus *Thermoactinomyces vulgaris*, Thermolysin, isoliert aus *Bacillus thermoproteolyticus*, oder Subtilisin, isoliert aus *Bacillus licheniformis,* ist.

**8.** Verwendung gemäß einem der Ansprüche 1 bis 7, wobei die Backwaren weiche Backwaren sind, wie z. B. Brot, weiche Brötchen, Donuts, Brötchen, Mikrowellen-Brötchen, Plundergebäck, Hamburger-Brötchen, Pizza und Pita-Brot und Kuchen.

**9.** Verwendung gemäß einem der vorstehenden Ansprüche, wobei 5000 bis 7500 Einheiten/100 kg Mehl an Thermitase verwendet werden, 0,35 bis 0,7 Einheiten/100 kg Mehl an Thermolysin verwendet werden, 0,35 bis 0,7 Einheiten/100 kg Mehl an Subtilisin verwendet werden oder 230 bis 10400 Einheiten/100 kg Mehl an *Thermus-aquaticus*-Protease verwendet werden, bevorzugter 350 bis 700 Einheiten/100 kg Mehl an *Thermus-aquaticus*-Protease verwendet werden.

**10.** Verwendung gemäß einem der Ansprüche 1 bis 7, wobei die Backwaren knusprige Produkte sind, wie z. B. Baguettes und Brötchen.

**11.** Verwendung gemäß Anspruch 10, wobei 1300 bis 10400 Einheiten/100 kg Mehl an *Thermus-aquaticus*-Protease verwendet werden.

**12.** Verwendung gemäß einem der vorstehenden Ansprüche, wobei die Protease vor dem Bilden des Teigs zu der Backware zugegeben wird; vorzugsweise wobei die Protease zu dem Mehl zugegeben wird; bevorzugter wobei die Protease zu einem Gemisch zugegeben wird, das geeignete Träger, die gewöhnlich in Backanwendungen verwendet werden, und/oder Wirkstoffe und/oder gewöhnlich verwendete Backzusätze umfasst.

**Revendications**

**1.** Utilisation d'au moins une sérine- ou métalloprotéase thermostable intermédiaire ou thermostable afin d'améliorer la mâche courte d'un produit de boulangerie, dans laquelle les paramètres de texture constitués de la force (g) et du travail total (g.s) nécessaires à rompre un échantillon identique de produit de boulangerie sont mesurés, où la force (g) et le travail total (g.s) sont tous deux améliorés d'au moins 10% par rapport à un échantillon identique mais ne contenant pas au moins une sérine- ou métalloprotéase thermostable intermédiaire ou thermostable, et où le rapport entre l'activité de protéase à une température optimale et l'activité de protéase à 25°C est supérieur à 10.

**2.** Utilisation selon la revendication 1, dans laquelle les paramètres de texture sont mesurés simultanément par un dispositif d'analyse de texture, utilisé pour rompre ledit produit de boulangerie.

**3.** Utilisation selon la revendication 1 ou 2, dans laquelle la facilité à mâcher par échantillon de produit de boulangerie est estimée par un panel de dégustation constitué de personnes.

**4.** Utilisation selon l'une quelconque des revendications 1 à 3, dans laquelle la protéase thermostable intermédiaire et/ou thermostable a un optimum d'activité de température supérieur à 60°C, préférablement supérieur à 70°C, préférablement supérieur à 80°C.

**5.** Utilisation selon l'une quelconque des revendications 1 à 4, dans laquelle le rapport entre l'activité de protéase à une température optimale et l'activité de protéase à 25°C est supérieur à 15.

**6.** Utilisation selon l'une quelconque des revendications 1 à 5, dans laquelle les protéases ne présentent aucun effet néfaste sur la rhéologie de la pâte, sur la structure de la mie et sur le volume du produit de boulangerie résultant.

**7.** Utilisation selon l'une quelconque des revendications précédentes, dans laquelle la protéase est une protéase isolée à partir de *Thermus aquaticus,* préférablement étant essentiellement l'aqualysine I, la thermitase, isolée à partir de *Thermoactinomyces vulgaris*, la thermolysine, isolée à partir de *Bacillus thermoproteolyticus,* ou la subtilisine, isolée à partir de *Bacillus licheniformis.*

**8.** Utilisation selon l'une quelconque des revendications 1 à 7, dans laquelle les produits de boulangerie sont des produits de boulangerie moelleux tels que le pain, les petits pains moelleux, les donuts, les petits pains au lait, les petits pains au lait pour cuisson aux micro-ondes, les viennoiseries, les pains pour hamburger, la pâte à pizza et pita, ainsi que les cakes.

**9.** Utilisation selon l'une quelconque des revendications précédentes, dans laquelle de 5000 à 7500 unités/100 kg de farine de thermitase sont utilisées, de 0,35 à 0,7 unité/100 kg de farine de thermolysine est utilisée, de 0,35 à 0,7 unité/100 kg de farine de subtilisine est utilisée, ou de 230 à 10 400 unités/100 kg de farine de protéase de *Thermus aquaticus* sont utilisées, plus préférablement de 350 à 700 unités/100 kg de farine de protéase de *Thermus aquaticus* sont utilisées.

**10.** Utilisation selon l'une quelconque des revendications 1 à 7, dans laquelle les produits de boulangerie sont des produits de boulangerie croustillants tels que les baguettes et les petits pains.

**11.** Utilisation selon la revendication 10, dans laquelle de 1300 à 10 400 unités/100 kg de farine de protéase de *Thermus aquaticus* sont utilisées.

**12.** Utilisation selon l'une quelconque des revendications précédentes, dans laquelle ladite protéase est ajoutée audit produit de boulangerie avant la formation de la pâte ; préférablement, ladite protéase est ajoutée à la farine ; plus préférablement, ladite protéase est ajoutée à un mélange comprenant les agents de charge appropriés habituellement utilisés dans des applications de boulangerie et/ou les ingrédients actifs et/ou les additifs de boulangerie habituellement utilisés.

Figure 1 :

Fig. 1a.

Fig. 1b

Figure 2:

Fig. 2a

Fig. 2b

Fig. 2c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0776604 A
- EP 1496748 B
- EP 1790230 A
- EP 1350432 A
- WO 2005077194 A
- WO 2005077192 A

**Non-patent literature cited in the description**

- **SAI MANOHAR ; P. HARIDAS RAO.** *Adv. Food Sci,* 1997, vol. 19, 15-21
- **KRUGER, J.E.** *Enzymes and their role in cereal technology AACC,* 1987, 290-304
- **SCHWIMMER, S.** Source book of food enzymology. AVI Publishing, 1981, 583-584